# EUROPEAN PATENT SPECIFICATION

(11) **EP 2 415 375 B1**
(45) Date of publication and mention of the grant of the patent: **03.04.2013**
(21) Application number: 11176764.6
(22) Date of filing: 05.08.2011
(51) Int. Cl.: A47J 31/36

(54) **Infusion assembly for a machine for brewing beverages**
Infusionsanordnung für eine Vorrichtung zum Aufbrühen von Getränken
Ensemble d'infusion pour un appareil de production des boissons par infusion

(30) Priority: 05.08.2010 IT BO20100509
(43) Date of publication of application: 08.02.2012
(73) Proprietor: Neronobile S.r.l., 20122 Milano (IT)
(72) Inventor: Furia, Giampaolo, 36013 Thiene (IT)
(74) Representative: Jorio, Paolo

(56) References cited:
- EP-A1- 1 721 553
- EP-A1- 2 070 452
- EP-A1- 2 077 087
- EP-A1- 2 105 074
- WO-A1-2007/016977
- WO-A1-2010/004376

## Description

The present invention relates to an infusion assembly for brewing, e.g. coffee, machines.

More specifically, the present invention relates to an infusion assembly for machines for brewing beverages from an agglomerate of flavouring substances normally contained in a container such as a capsule or wafer.

Infusion assemblies of the known type comprise an infusion chamber, and a flavouring substance container handling device, which are movable with respect to each other from an open position, in which the container can be inserted inside the handling device, to a closed position, in which the container is housed inside the infusion chamber.

Infusion assemblies of the above type are described for example in documents EP-A1- 1721 553 and EP-A1-2 070 452.

The handling device of infusion assemblies of the above type has one or more gripping members for securing the container to the handling device from when the container is inserted inside the infusion assembly, until the container is unloaded at the end of the brewing operation.

A common drawback of infusion assemblies of the above type lies in the handling device gripping members not always releasing the container in time at the end of the brewing operation, thus resulting in jamming of the infusion assembly.

It is an object of the present invention to provide an infusion assembly designed to eliminate the above drawback.

According to the present invention, there is provided an infusion assembly as claimed in Claim 1 and preferably in any one of the following Claims depending directly or indirectly on Claim 1.

A non-limiting embodiment of the invention will be described by way of example with reference to the accompanying drawings, in which :
Figure 1 shows a view in perspective, with parts removed for clarity, of a brewing machine equipped with a preferred embodiment of the infusion assembly according to the present invention;
Figure 2 shows an exploded view, with parts removed for clarity, of a preferred embodiment of the Figure 1 infusion assembly;
Figures 3 to 6 show partly sectioned views in perspective, with parts removed for clarity, of the Figure 1 infusion assembly in respective operating positions;
Figure 7 shows a topside view in perspective of a detail of the infusion assembly according to the present invention in one operating position;
Figure 8 is similar to Figure 7 and shows a variation of the Figure 7 detail;
Figure 9 shows an underside view in perspective of the Figure 7 and 8 detail.

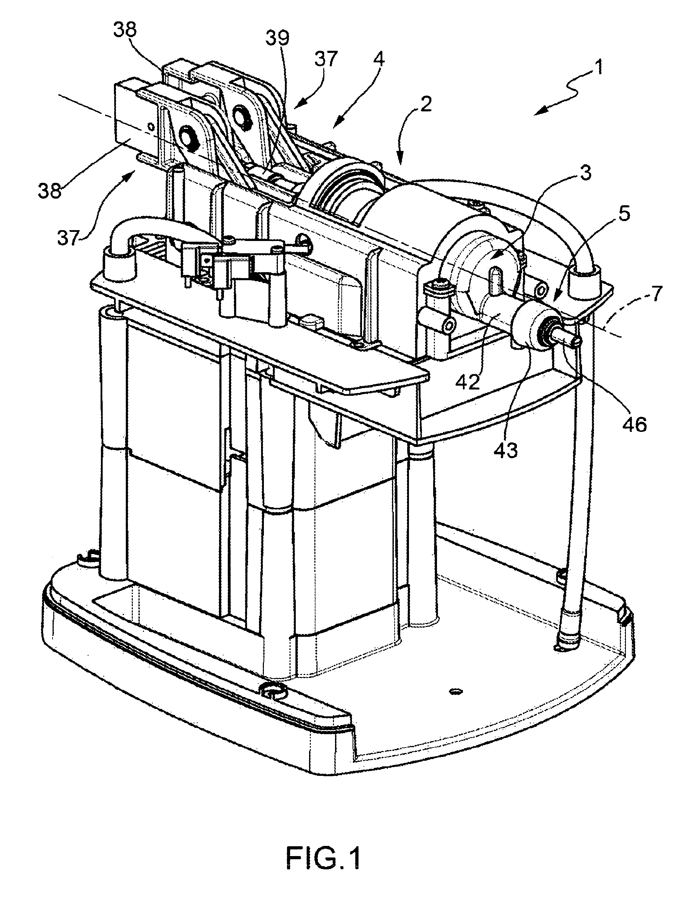

Number 1 in Figure 1 indicates as a whole a machine for brewing beverages, in particular coffee, from an agglomerate (not shown) of flavouring substances normally defined by a given amount of ground flavouring substances, such as coffee, contained in a container such as a capsule or wafer. Alternatively, the agglomerate may be defined by a given amount of flavouring substances compacted into a rigid body. For the sake of simplicity, reference is made in the following description to an agglomerate of flavouring substances in capsule form, though purely by way of example.

Machine 1 comprises an infusion assembly 2, in turn comprising an infusion chamber 3; a handling device 4 for receiving a capsule inserted into infusion assembly 2, and for positioning it inside infusion chamber 3; and a dispensing system 4 for dispensing the brew formed in infusion chamber 3.

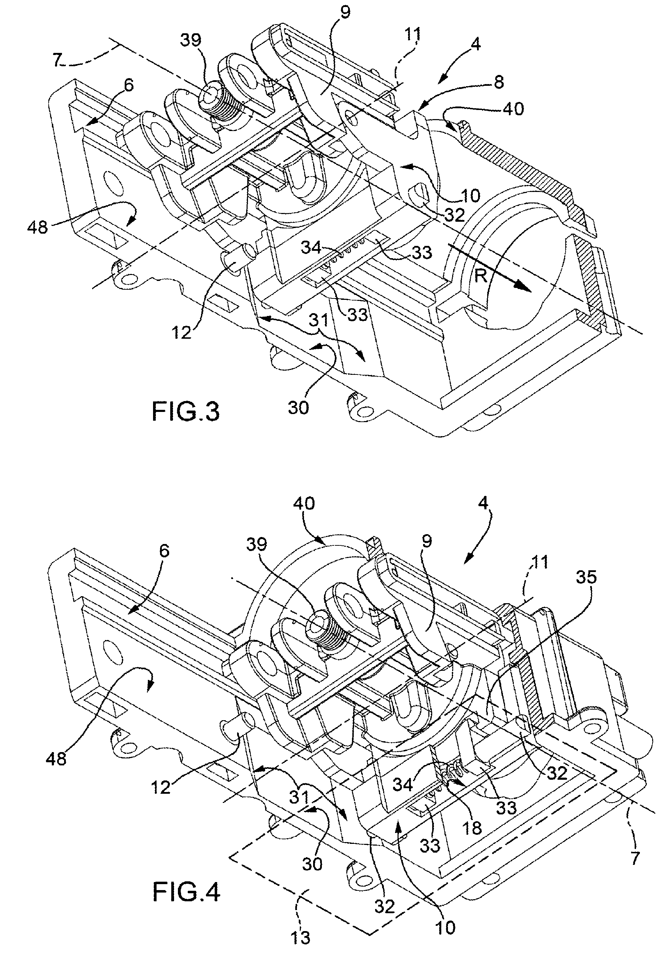

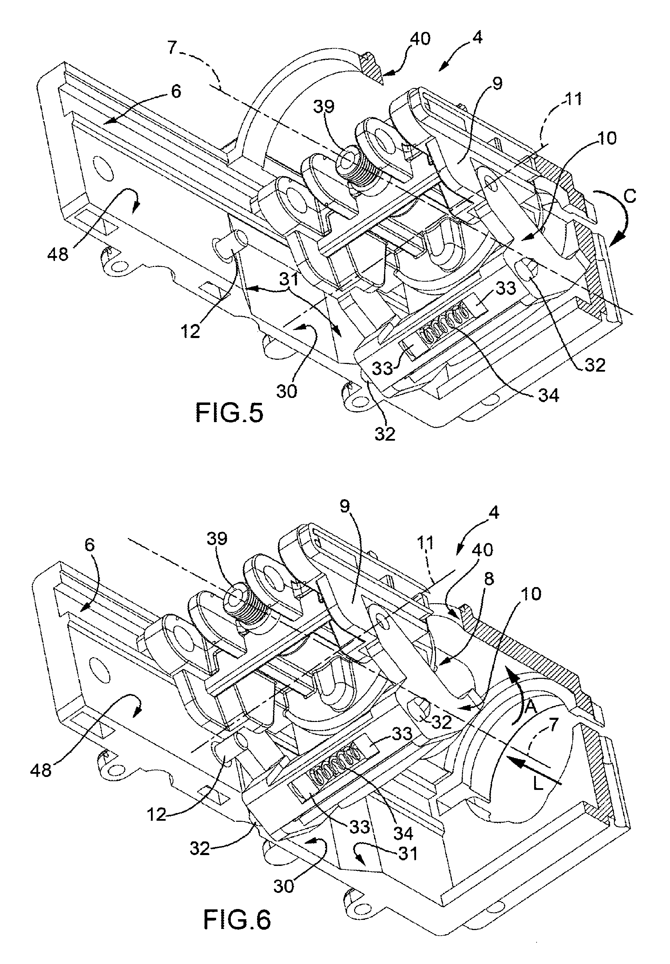

Infusion chamber 3 and handling device 4 are movable back and forth with respect to each other from an open position (Figures 1 and 3) to a closed position (Figure 5).

In the open position (Figures 1 and 3), handling device 4 is positioned to receive a capsule inserted into infusion assembly 2; in the closed position (Figure 5), handling device 4 is positioned closing infusion chamber 3. More specifically, infusion chamber 3 is fixed, and handling device 4 is movable.

As shown in Figures 3 to 6, handling device 4 comprises two parallel guides 6 (only one shown in Figures 3 to 6 for the sake of simplicity) arranged specularly with respect to a longitudinal axis 7; and a pusher 8 which slides along axis 7 to manipulate the capsule with respect to infusion chamber 3. In the following description, the closing travel direction and opening travel direction of pusher 8 are indicated R and L respectively.

Pusher 8 in turn comprises a carriage 9 which slides back and forth along guide 6; and a support 10 hinged to carriage 9 to rotate about an axis 11 perpendicular to longitudinal axis 7. More specifically, support 10 is rotatable selectively back and forth about axis 11 into a top receiving position (Figure 3) and a bottom release position (Figure 5).

Finally, handling device 4 comprises at least one actuating means 12 for rotating support 10 in a direction A (Figure 6) from the release to the receiving position; and an actuating system 13 for rotating support 10 in a direction C (Figure 5) from the receiving to the release position.

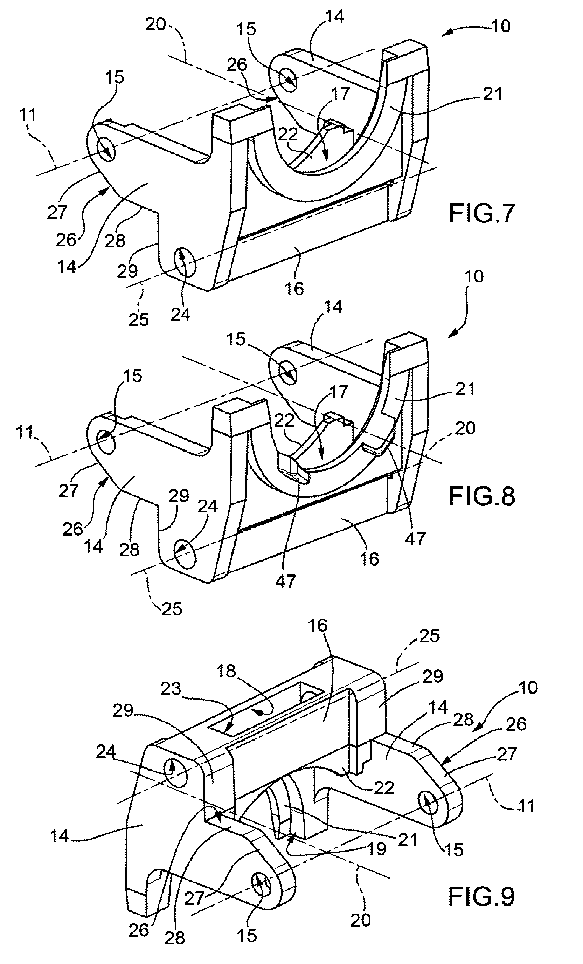

As shown in Figures 7 to 9, support 10 in turn comprises two parallel brackets 14 arranged specularly with respect to a plane containing longitudinal axis 7, and each having a circular through hole 15 coaxial with axis 11.

Support 10 also comprises a wall 16 connecting brackets 14 and substantially perpendicular to axis 7.

Wall 16 comprises a seat 17 for housing at least a peripheral portion of a capsule; and a seat 18 for housing part of actuating system 13, as described in detail below. More specifically, infusion assembly 2 is designed to receive capsules comprising a substantially cylindrical box body, and an annular edge which projects radially outwards of the capsule body, close to a longitudinal end of the capsule; and seat 17 is designed to house a peripheral portion of the edge of the capsule.

Seat 17 is bounded by a semicylindrical surface 19 with an axis 20 crosswise to axis 11, and with its concavity facing upwards when support 10 is in the receiving position; support 10 comprises an outer shoulder 21 and an inner shoulder 22; and interaction of surface 19 and inner and outer shoulders 22, 21 defines seat 17.

As shown in Figures 7 to 9, outer shoulder 21 is defined by an annular wall projecting radially inwards of seat 17, and projects from the longitudinal end of surface 19 furthest from axis 11. Inner shoulder 22 is defined by a wall interposed between surface 19 and axis 11 and projecting radially inwards of surface 19. More specifically, inner shoulder 22 is defined radially inwards of axis 20 by a semicylindrical surface. And outer shoulder 21 and inner shoulder 22 secure the edge of the capsule, and therefore the capsule itself, along axis 20.

Seat 18 is parallelepiped-shaped, and faces outwards through an opening 23, facing downwards when support 10 is in the receiving position, and through two coaxial lateral holes 24 aligned along an axis 25 substantially parallel to the hinge axis 11 of support 10.

Each bracket 14 is T-shaped, and has a cam profile 26 extending laterally along axis 20 from a point close to axis 11 to a point close to axis 24, and which comprises, in succession from axis 11 to axis 24 and with respect to axis 20 : a sloping portion 27, a parallel portion 28, and a perpendicular portion 29. Together with actuating means 12, cam profile 26 rotates support 10 in direction A, as it moves in opening direction L, from the release position (Figure 6) to the receiving position (Figure 3). As shown in Figures 3 to 6, each actuating means 12 is defined by a stop. More specifically, handling device 4 comprises two opposite walls 48 (only one shown in Figures 3 to 6 for the sake of clarity) arranged specularly with respect to a plane through longitudinal axis 7; and two stops 12, each fitted to a respective wall 48 of holding device 4, and each in the form of a pin projecting from respective wall 48 and facing support 10. More specifically, each pin 12 is positioned with its longitudinal axis substantially parallel to axis 11.

As shown in Figures 3 to 6, each wall 48 is defined by an inner surface facing support 10 and having a cam profile. More specifically, each wall 48 has a dip 30 defined longitudinally by two sloping portions 31, each connecting dip 30 to a respective smaller cross section portion 49.

As explained in detail below, sloping portion 31 rotates support 10 in direction C from the receiving position to the release position. More specifically, sloping portion 31 is so located along longitudinal axis 7 that support 10 is moved into the release position before pusher 8 stops sliding in closing direction R. Preferably, sloping portion 31 is so located that support 10 is rotated as soon as the capsule is inserted inside infusion chamber 3, i.e. sloping portion 31 rotates support 10 at a distance from infusion chamber 3 smaller than the length of the capsule along longitudinal axis 7.

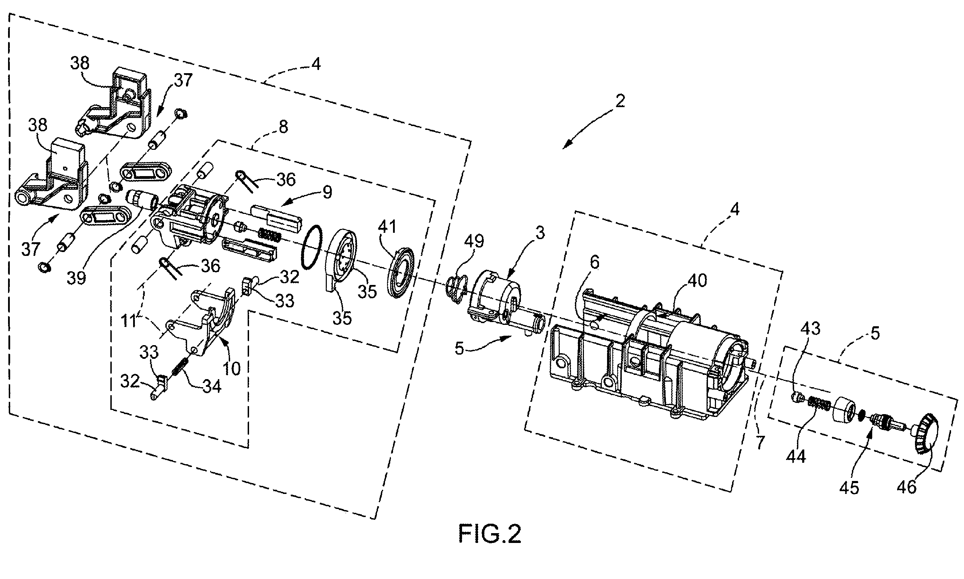

As stated, actuating system 13 provides for rotating support 10 in direction C from the receiving position to the release position, and comprises two cam followers 32; two teeth 33, each integral with a respective cam follower 32; a compression spring 34; two catches 35, each integral with carriage 9; and two torsion springs 36 (Figure 2), each hinged to carriage 9 and for pushing support 10 in direction C about axis 11 into the release position.

Each cam follower 32 is defined by a cylindrical body, is coaxial with axis 25, is fitted through a respective hole 24 to slide along axis 25, and projects partly outwards of support 10 and partly inside seat 18. Each tooth 33 is integral with a respective cam follower 32, and is located inside seat 18 to slide along axis 25.

As shown in Figures 3 to 6, spring 34 is located inside seat 18, is interposed between teeth 33 of actuating system 13, which are positioned facing inside seat 18, and is a compression spring for pushing cam follower 32 outwards of support 10. When support 10 is in the receiving position (Figure 3), each tooth 33 engages a respective catch 35 integral with carriage 9. Each tooth 33 disengages respective catch 35 by moving inwards of seat 18 along axis 25, and engages respective catch 35 by moving outwards of seat 18 along axis 25.

Each torsion spring 36 has an eyelet coaxial with axis 11, is integral with carriage 9, and exerts a twisting force on support 10 to rotate it about axis 11 into the release position.

As shown in Figure 4, as it slides along sloping portion 31, cam follower 32 is pushed gradually inwards of seat 18 to disengage tooth 33 from catch 35.

As shown in Figures 1 and 2, infusion assembly 2 comprises two toggle joint means 37 for moving pusher 8 along axis 7, and which are connected to carriage 9, are parallel and specular with respect to a plane through longitudinal axis 7, and each comprise a known knob 38 (shown schematically with parts removed for clarity) user-operated directly to move pusher 8 in closing direction R or opening direction L.

Infusion assembly 2 comprises a conduit 39 for feeding water to infusion chamber 3. Conduit 39 is located between joint means 37, has an axis parallel to longitudinal axis 7, is integral with pusher 8, and, as pusher 8 moves, remains coaxial with longitudinal axis 7 to reduce wear of a known, normally plastic tube (not shown) for feeding water to conduit 39.

Pusher 8 comprises a seal 41 fitted in known manner to carriage 9, facing infusion chamber 3, and which adheres to the edge of the capsule to seal infusion chamber 3 during infusion.

Brew dispensing system 5 comprises a conduit 42 coaxial with longitudinal axis 7 and fitted with a regulating valve 43 with a spring preloaded by a screw system 45 connected in known manner to an external knob 46, which projects from a larger lateral wall of machine 1.

Infusion chamber 3 comprises a compression spring 49 (Figure 2) housed inside infusion chamber 3, and which pushes the capsule out of infusion chamber 3 as carriage 9 moves in opening direction L.

In the Figure 8 variation, support 10 comprises two projections 47, each projecting, parallel to longitudinal axis 7, from the opposite side of outer shoulder 21 to that facing seat 17, and each having a concave supporting surface matching and aligned with the semicircular profile of outer shoulder 21.

Infusion assembly 2 operates as follows.

When infusion assembly 2 is open (Figure 3), support 10 is in the receiving position, and a capsule can be inserted into infusion assembly 2 through an opening 40, so a peripheral portion of the capsule engages seat 17 of support 10, which is positioned with seat 17 facing opening 40.

Once the capsule is loaded into support 10, the user, gripping at least one knob 38, rotates joint means 37 in known manner to move pusher 8 in closing direction R.

Over a first part of the movement in closing direction R, cam followers 32 slide along respective walls 48, and, on reaching sloping portion 31 adjacent to infusion chamber 3 (Figure 4), each cam follower 32 is pushed along axis 25 into seat 18 to disengage tooth 33 from catch 35. At the same time, each torsion spring 34 rotates support 10 in direction C into the release position. As stated, each sloping portion 31 is designed to rotate support 10 as soon as the capsule engages infusion chamber 3.

Over a second part of the movement in closing direction R, support 10 is in the release position, and the capsule is held in position by infusion chamber 3, into which it is pushed by carriage 9. And pusher 8 continues moving in closing direction R until it seals infusion chamber 3 (Figure 5).

The brew is then made in known manner by feeding hot pressurized liquid into infusion chamber 3 along conduit 39.

Handling device 4 is then opened to unload the capsule and load a fresh capsule for the next brew.

Over a first part of the movement in opening direction L, cam followers 32 move along sloping portions 31 adjacent to infusion chamber 3, support 10 is maintained in the release position, and spring 49 pushes the capsule out of infusion chamber 3, substantially along axis 7. When pushed at least partly out of infusion chamber 3, the capsule is diverted downwards by force of gravity and drops into a known bin (not shown).

Over a second part of the movement in opening direction L, and after the capsule drops into the bin, cam profile 26 of support 10 is pushed against stop 12 (Figure 6), and support 10, as it moves in opening direction L, is rotated back into the receiving position (Figure 3).

Infusion assembly 2 described thus releases the capsule from support 10 as soon as the capsule is inserted inside infusion chamber 3; and the used capsule drops solely by force of gravity into the bin, so infusion assembly 2 described provides for expelling the capsules quickly and easily, with no jamming.

## Claims

1. An infusion assembly (2) for machines for brewing beverages from an agglomerate of flavouring substances; the infusion assembly (2) comprises an infusion chamber (3), and a handling device (4) for inserting the agglomerate inside the infusion chamber (3); at least one of the infusion chamber (3) and the handling device (4) is movable selectively with respect to the other along a longitudinal axis (7) into an open position, in which the handling device (4) receives the agglomerate, or a closed position, in which the handling device (4) closes the infusion chamber (3); the handling device (4) comprises a movable support (10) for housing the agglomerate; the infusion assembly (2) comprises first (12, 26) and second (30-36) actuating system for moving the support (10); the first actuating system (12, 26) is adapted to move the support (10) into an agglomerate receiving position as the support moves in an opening direction (L), and the second actuating system (30-36) is adapted to move the support (10) into an agglomerate release position as the support moves in a closing direction (R); the second actuating system (30-36) moves the support (10) into the release position before the infusion chamber (3) is closed; and the infusion chamber (3) is fixed, and the support (10) movable back and forth along the longitudinal axis (7); the infusion assembly (2) being **characterized in that** the handling device (4) comprises a guide (6) parallel to the longitudinal axis (7), and a carriage (9) movable back and forth along said guide (6); and the support (10) is hinged to the carriage (9) and mounted to rotate selectively, about an axis (11) perpendicular to said longitudinal axis (7), into a top receiving position and a bottom release position.

2. An infusion assembly as claimed in Claim 1, wherein the second actuating system (30-36) moves the support (10) into the release position when the distance between the support (10) and the infusion chamber (3) is less than the length of the infusion chamber (3) along said longitudinal axis (7).

3. An infusion assembly as claimed in Claim 1 or 2, wherein the support (10) is moved into the release position as the handling device (4) pushes the agglomerate into the infusion chamber (3), as the support moves in the closing direction (R).

4. An infusion assembly as claimed in one or more of Claims 1 to 3, wherein the support (10) comprises a seat (17) for a peripheral portion of the agglomerate; the seat (17) faces the insertion direction of the agglomerate into the infusion assembly (2); and the agglomerate is made integral with the seat (17) by force of gravity.

5. An infusion assembly as claimed in one or more of Claims 1 to 4, wherein the first actuating system (12, 26) comprises a fixed stop (12) which cooperates with an outer profile (26) of the support (10), as the support moves in the opening direction (L), to move the support (10) into the release position.

6. An infusion assembly as claimed in one or more of Claims 1 to 5, wherein the second actuating system (30-36) comprises a fixed cam profile (30, 31) facing the handling device (4); a cam follower (32) integral with the support (10) of the handling device (4); an elastic member (34) which pushes the cam follower (32) onto the cam profile (30, 31); a tooth (33) integral with the cam follower (32); a catch (35) integral with the carriage (9); and an elastic member (36) which is integral with the carriage (9) and pushes the support (10) downwards; the tooth (33), depending on the position of the cam follower (32), being movable into a position engaging the catch (35), to secure the support (10) in the receiving position, and into a detached position in which the tooth (33) disengages the catch (35); and the elastic member (36) pushing the support (10) into the release position when the tooth (33) is in the detached position.

7. An infusion assembly as claimed in one of Claims 1 to 6, and comprising two toggle joint systems (37) for moving the pusher (8); the joint systems (37) are connected to the carriage (9), and are parallel and specular with respect to a plane containing the longitudinal axis (7); each joint system (37) comprises a user-operated knob (38); and the infusion assembly (2) comprises a conduit (39) for feeding water to the infusion chamber (3) and located between said joint systems (37), along the longitudinal axis (7).

8. A machine for brewing beverages from an agglomerate of flavouring substances, and comprising an infusion assembly (2) as claimed in one or more of Claims 1 to 7.

## Patentansprüche

1. Infusionsanordnung (2) für Maschinen zum Brauen von Getränken aus einem Agglomerat von Aromastoffen; wobei die Infusionsanordnung (2) eine Infusionskammer (3) und eine Handhabungsvorrichtung (4) zum Einführen des Agglomerats in die Infusionskammer (3) umfasst; wobei die Infusionskammer (3) oder die Handhabungsvorrichtung (4) oder beide gezielt relativ zueinander entlang einer Längsachse (7) in eine offene Position, in der die Handhabungsvorrichtung (4) das Agglomerat empfängt, oder in eine geschlossene Position, in der die Handhabungsvorrichtung (4) die Infusionskammer (3) schließt, bewegt werden können; wobei die Handhabungsvorrichtung (4) einen beweglichen Träger (10) zum Aufnehmen des Agglomerat umfasst; wobei die Infusionsanordnung (2) ein erstes (12, 26) und ein zweites (30-36) Betätigungssystem zum Bewegen des Trägers (10) umfasst; wobei das erste Betätigungssystem (12, 26) dafür eingerichtet ist, den Träger (10) in eine Position zum Aufnehmen des Agglomerats zu bewegen, wenn sich der Träger in einer Öffnungsrichtung (L) bewegt, und das zweite Betätigungssystem (30-36) dafür eingerichtet ist, den Träger (10) in eine Position zum Ausgeben des Agglomerats zu bewegen, wenn sich der Träger in einer Schließrichtung (R) bewegt; wobei das zweite Betätigungssystem (30-36) den Träger (10) in die Ausgabeposition bewegt, bevor die Infusionskammer (3) geschlossen wird; und wobei die Infusionskammer (3) ortsfest ist und der Träger (10) entlang der Längsachse (7) vor und zurück bewegt werden kann; wobei die Infusionsanordnung (2) **dadurch gekennzeichnet ist, dass** die Handhabungsvorrichtung (4) eine Führung (6), die parallel zu der Längsachse (7) verläuft, und einen Schlitten (9), der entlang der Führung (6) vor und zurück bewegt werden kann, umfasst; und der Träger (10) an dem Schlitten (9) angelenkt ist und so montiert ist, dass er sich selektiv um eine Achse (11), die senkrecht zu der Längsachse (7) verläuft, in eine oben liegende Aufnahmeposition und eine unten liegende Ausgabeposition drehen kann.

2. Infusionsanordnung nach Anspruch 1, wobei das zweite Betätigungssystem (30-36) den Träger (10) in die Ausgabeposition bewegt, wenn die Distanz zwischen dem Träger (10) und der Infusionskammer (3) kleiner ist als die Länge der Infusionskammer (3) entlang der Längsachse (7).

3. Infusionsanordnung nach Anspruch 1 oder 2, wobei der Träger (10) in die Ausgabeposition bewegt wird, wenn die Handhabungsvorrichtung (4) das Agglomerat in die Infusionskammer (3) schiebt, während sich der Träger in der Schließrichtung (R) bewegt.

4. Infusionsanordnung nach einem oder mehreren der Ansprüche 1 bis 3, wobei der Träger (10) einen Sitz (17) für einen umlaufenden Abschnitt des Agglomerats umfasst; wobei der Sitz (17) in die Richtung des Einschubs des Agglomerats in die Infusionsanordnung (2) weist; und das Agglomerat durch Schwerkraft mit dem Sitz (17) integral wird.

5. Infusionsanordnung nach einem oder mehreren der Ansprüche 1 bis 4, wobei das erste Betätigungssystem (12, 26) einen ortsfesten Endanschlag (12) umfasst, der mit einem äußeren Profil (26) des Trägers (10) zusammenwirkt, wenn sich der Träger in der Öffnungsrichtung (L) bewegt, um den Träger (10) in die Ausgabeposition zu bewegen.

6. Infusionsanordnung nach einem oder mehreren der Ansprüche 1 bis 5, wobei das zweite Betätigungssystem (30-36) Folgendes umfasst: ein Festnockenprofil (30, 31), das der Handhabungsvorrichtung (4) zugewandt ist; einen Stößel (32), der integral mit dem Träger (10) der Handhabungsvorrichtung (4) ausgebildet ist; ein elastisches Element (34), das den Stößel (32) auf das Nockenprofil (30, 31) schiebt; einen Zahn (33), der integral mit dem Stößel (32) ausgebildet ist; eine Sperrklinke (35), die integral mit dem Schlitten (9) ausgebildet ist; und ein elastisches Element (36), das integral mit dem Schlitten (9) ausgebildet ist und den Träger (10) nach unten schiebt; wobei der Zahn (33), je nach Position des Stößels (32), in eine Position bewegt werden kann, in der die Sperrklinke (35) in Eingriff genommen wird, um den Träger (10) in der Aufnahmeposition zu sichern, und in eine gelöste Position bewegt werden kann, in welcher der Zahn (33) die Sperrklinke (35) nicht in Eingriff nehmen kann; und wobei das elastisches Element (36) den Träger (10) in die Ausgabeposition schiebt, wenn der Zahn (33) in der gelösten Position ist.

7. Infusionsanordnung nach einem der Ansprüche 1 bis 6, die zwei Kniehebelsysteme (37) zum Bewegen des Drückers (8) umfasst; wobei die Kniehebelsysteme (37) mit dem Schlitten (9) verbunden sind und parallel und spiegelbildlich mit Bezug auf eine Ebene angeordnet sind, welche die Längsachse (7) umfasst; wobei jedes Kniehebelsystem (37) einen nutzerbedienten Knauf (38) umfasst; und die Infusionsanordnung (2) einen Kanal (39) zum Zuführen von Wasser zu der Infusionskammer (3) umfasst, der zwischen den Kniehebelsystemen (37) entlang der Längsachse (7) angeordnet ist.

8. Maschine zum Brauen von Getränken aus einem Agglomerat von Aromastoffen, die eine Infusionsanordnung (2) nach einem oder mehreren der Ansprüche 1 bis 7 umfasst.

## Revendications

1. Ensemble d'infusion (2) pour des machines destinées à infuser des boissons à partir d'un agglomérat de substances aromatisantes ; l'ensemble d'infusion (2) comprend une chambre d'infusion (3) et un dispositif de manipulation (4) destiné à insérer l'agglomérat à l'intérieur de la chambre d'infusion (3) ; au moins l'un(e) de la chambre d'infusion (3) et du dispositif de manipulation (4) est mobile sélectivement par rapport à l'autre le long d'un axe longitudinal (7) en une position ouverte, dans laquelle le dispositif de manipulation (4) reçoit l'agglomérat, ou une position fermée, dans laquelle le dispositif de manipulation (4) ferme la chambre d'infusion (3) ; le dispositif de manipulation (4) comprend un support mobile (10) destiné à recevoir l'agglomérat ; l'ensemble d'infusion (2) comprend un premier (12, 26) et un deuxième (30-36) système d'actionnement permettant de déplacer le support (10) ; le premier système d'actionnement (12, 26) est adapté pour déplacer le support (10) à une position de réception d'agglomérat à mesure que le support se déplace dans une direction d'ouverture (L), et le deuxième système d'actionnement (30-36) est adapté pour déplacer le support (10) à une position de libération d'agglomérat à mesure que le support se déplace dans une direction de fermeture (R) ; le deuxième système d'actionnement (30-36) déplace le support (10) à la position de libération avant la fermeture de la chambre d'infusion (3) ; et la chambre d'infusion (3) est fixée, et le support (10) effectue un mouvement de va-et-vient le long de l'axe longitudinal (7) ; l'ensemble d'infusion (2) étant **caractérisé en ce que** le dispositif de manipulation (4) comprend
un guide (6) parallèle à l'axe longitudinal (7), et un chariot (9) effectuant un mouvement de va-et-vient le long dudit guide (6) ; et le support (10) est articulé sur le chariot (9) et monté pour tourner sélectivement, autour d'un axe (11) perpendiculaire audit axe longitudinal (7), à une position de réception supérieure et une position de libération inférieure.

2. Ensemble d'infusion selon la revendication 1, dans lequel le deuxième système d'actionnement (30-36) déplace le support (10) à la position de libération lorsque la distance entre le support (10) et la chambre d'infusion (3) est inférieure à la longueur de la chambre d'infusion (3) le long dudit axe longitudinal (7).

3. Ensemble d'infusion selon la revendication 1 ou 2, dans lequel le support (10) est déplacé à la position de libération à mesure que le dispositif de manipulation (4) pousse l'agglomérat dans la chambre d'infusion (3), à mesure que le support se déplace dans la direction de fermeture (R).

4. Ensemble d'infusion selon une ou plusieurs des revendications 1 à 3, dans lequel le support (10) comprend un siège (17) destiné à une partie périphérique de l'agglomérat ; le siège (17) fait face à la direction d'insertion de l'agglomérat dans l'ensemble d'infusion (2) ; et l'agglomérat étant solidaire du siège (17) par la force de gravité.

5. Ensemble d'infusion selon une ou plusieurs des revendications 1 à 4, dans lequel le premier système d'actionnement (12, 26) comprend une butée fixe (12) qui coopère avec un profil extérieur (26) du support (10), à mesure que le support se déplace dans la direction d'ouverture (L), pour déplacer le support (10) à la position de libération.

6. Ensemble d'infusion selon une ou plusieurs des revendications 1 à 5, dans lequel le deuxième système d'actionnement (30-36) comprend un profil de came fixe (30, 31) faisant face au dispositif de manipulation (4) ; un galet de came (32) solidaire au support (10) du dispositif de manipulation (4) ; un élément élastique (34) qui pousse le galet de came (32) sur le profil de came (30, 31) ; une dent (33) solidaire du galet de came (32) ; un cliquet (35) solidaire du chariot (9) ; et un élément élastique (36) qui est solidaire du chariot (9) et pousse le support (10) vers le bas ; la dent (33), en fonction de la position du galet de came (32), pouvant se déplacer à une position engageant le cliquet (35), pour fixer le support (10) dans la position de réception, et à une position détachée dans laquelle la dent (33) libère le cliquet (35) ; et l'élément élastique (36) poussant le support (10) à la position de libération lorsque la dent (33) est dans la position détachée.

7. Ensemble d'infusion selon l'une des revendications 1 à 6, et comprenant deux systèmes d'articulation à genouillère (37) pour déplacer le poussoir (8) ; les systèmes d'articulation (37) sont reliés au chariot (9), et sont parallèles et spéculaires par rapport à un plan contenant l'axe longitudinal (7) ; chaque système d'articulation (37) comprend un bouton actionné par l'utilisateur (38) ; et l'ensemble d'infusion (2) comprend un conduit (39) destiné à alimenter l'eau à la chambre d'infusion (3) et situé entre lesdits systèmes d'articulation (37), le long de l'axe longitudinal (7).

8. Machine permettant d'infuser des boissons à partir d'un agglomérat de substances aromatisantes, et comprenant un ensemble d'infusion (2) selon une ou plusieurs des revendications 1 à 7.
